(19) Europäisches Patentamt
European Patent Office
Office européen des brevets

(11) EP 2 568 008 B1

(12) # EUROPEAN PATENT SPECIFICATION

(45) Date of publication and mention of the grant of the patent:
**22.03.2017 Bulletin 2017/12**

(21) Application number: **11820017.9**

(22) Date of filing: **25.08.2011**

(51) Int Cl.:
***C08L 27/16*** *(2006.01)* ***C08K 3/04*** *(2006.01)*
***C08J 5/00*** *(2006.01)*

(86) International application number:
**PCT/JP2011/069231**

(87) International publication number:
**WO 2012/026555 (01.03.2012 Gazette 2012/09)**

(54) **FLUORORUBBER COMPOSITION AND MOLDED ARTICLE THEREOF**

FLUORKAUTSCHUKZUSAMMENSETZUNG UND FORMKÖRPER DARAUS

COMPOSITION À BASE DE CAOUTCHOUC FLUORÉ ET ARTICLE MOULÉ À BASE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2010 US 376976 P**

(43) Date of publication of application:
**13.03.2013 Bulletin 2013/11**

(73) Proprietor: **Daikin Industries, Ltd.**
**Osaka 530-8323 (JP)**

(72) Inventors:
- **OTA Daisuke**
  **Osaka-Shi, Osaka 530-8323 (JP)**
- **TERADA Junpei**
  **Osaka-Shi, Osaka 530-8323 (JP)**
- **KITAICHI Masanori**
  **Osaka-Shi, Osaka 530-8323 (JP)**
- **UETA Yutaka**
  **Osaka-Shi, Osaka 530-8323 (JP)**
- **MORITA Shigeru**
  **Osaka-Shi, Osaka 530-8323 (JP)**
- **KAWASAKI Kazuyoshi**
  **Osaka-Shi, Osaka 530-8323 (JP)**
- **MORIKAWA Tatsuya**
  **Osaka-Shi, Osaka 530-8323 (JP)**
- **FUKUOKA Shoji**
  **Osaka-Shi, Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**WO-A1-2008/078738**
**WO-A1-2009/119409**
**JP-A- 3 122 153**
**JP-A- 2003 013 041**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 568 008 B1

**Description**

TECHNICAL FIELD

The present invention relates to a fluororubber formed product having excellent mechanical properties at high temperatures.

BACKGROUND ART

Fluororubbers are known to be excellent in chemical resistance, oil resistance, and heat resistance, and also to have good compression set resistance at high temperatures. Fluororubbers are now desired to have better mechanical properties at high temperatures, such as strength at high temperature and elongation at high temperature. For example, when a cross-linked fluororubber product is used at as high temperature as more than 100°C, the product is required to have excellent mechanical properties at high temperatures as well as heat resistance, for high durability.

In terms of an increase in the compression set resistance, compositions such as one taught in Patent Document 1 have been proposed. Those compositions, however, have low elongation at room temperature, and therefore will probably have lower elongation at high temperature. The composition described in Patent Document 2 has higher elongation at high temperature, but does not have resistance to more severe use environment. The combination of a fluororubber and a thermoplastic fluoroelastomer in Patent Document 3 is an example of higher strength at high temperature, but the elongation at room temperature of this composition is also low, and therefore the elongation at high temperature will probably be even lower.

Document WO 2008/078738 A1 discloses compositions of fluororubber having more than 10 mol-% of TFE and MT Carbon Black, having a $N_2SA$ value of 8 $m^2/g$. Similar carbon black is used in document EP 2 264 100 A1. Document JPH 03 122153 A discloses chemical, heat and oil resistant fluororubbers, having improved tensile strength, prepared using carbon black having a higher nitrogen adsorption specific surface area, but does not disclose fluororubbers comprising units derived from a compound of Formula (1) or a bis-olefin, and 0-10 mol-% of TFE units.

Patent Document 1: JP S60-55050 A
Patent Document 2: JP 2008-184496 A
Patent Document 3: JP H06-25500 A

SUMMARY OF THE INVENTION

PROBLEMS TO BE SOLVED BY THE INVENTION

The present invention aims to provide a fluororubber formed product having excellent heat resistance and excellent mechanical properties at high temperatures.

MEANS FOR SOLVING THE PROBLEMS

The present invention relates to a formed product according to claim 6 comprising a cross-linked fluororubber product obtained by cross-linking a fluororubber composition according to claim 1 containing a fluororubber (A) and a carbon black (B).

The fluororubber (A) is a vinylidene fluoride fluororubber including: 48 to 88 mol% of a structural unit derived from vinylidene fluoride and 0 to 10 mol% of a structural unit derived from tetrafluoroethylene to the total amount 100 mol% of structural units derived from all monomer components; and at least one structural unit selected from the group consisting of structural units derived from bis-olefins and structural units derived from compounds represented by general formula (1):

$$CY^1_2=CY^2R_f^1X^1 \qquad (1)$$

wherein $Y^1$ and $Y^2$ may be the same as or different from each other, and each of these is a fluorine atom, hydrogen atom, or $-CH_3$; $R_f^1$ is a linear or branched fluoroalkylene group which may have one or more ethereal oxygen atoms and have fluorine atoms substituted for a part or all of the hydrogen atoms; and $X^1$ is an iodine atom or a bromine atom.

The cross-linked fluororubber product has a loss modulus E" of 400 kPa or higher and 6,000 kPa or lower determined by a dynamic viscoelasticity test under conditions of a measurement temperature of 160°C, tensile strain of 1%, initial force of 157 cN, and frequency of 10 Hz.

The present invention also relates to a fluororubber composition according to claim 1 comprising a fluororubber (A) and a carbon black (B). The fluororubber (A) is a vinylidene fluoride fluororubber including: 48 to 88 mol% of a structural unit derived from vinylidene fluoride and 0 to 10 mol% of a structural unit derived from tetrafluoroethylene to the total amount 100 mol% of structural units derived from all monomer components; and at least one structural unit selected from the group consisting of structural units derived from bis-olefins and structural units derived from compounds represented by general formula (1):

$$CY^1_2{=}CY^2R_f^1X^1 \qquad (1)$$

wherein $Y^1$ and $Y^2$ may be the same as or different from each other, and each of these is a fluorine atom, hydrogen atom, or $-CH_3$; $R_f^1$ is a linear or branched fluoroalkylene group which may have one or more ethereal oxygen atoms and have fluorine atoms substituted for a part or all of the hydrogen atoms; and $X^1$ is an iodine atom or a bromine atom.

The fluororubber composition before cross-linking preferably has a difference $\delta G'$ (G' (1%) - G' (100%)) of 120 kPa or higher and 3,000 kPa or lower. The difference is determined by subtracting the shear modulus G' (100%) at 100% dynamic strain from the shear modulus G' (1%) at 1% dynamic strain in a dynamic viscoelasticity test with a rubber process analyzer (RPA) under the conditions of a measurement frequency of 1 Hz and a measurement temperature of 100°C.

EFFECT OF THE INVENTION

The present invention can provide a fluororubber formed product having excellent heat resistance and excellent mechanical properties at high temperatures.

MODE(S) FOR CARRYING OUT THE INVENTION

The formed product of the present invention includes a cross-linked fluororubber product obtained by cross-link-molding a fluororubber composition containing a fluororubber (A) and a carbon black (B).

The fluororubber (A) is a vinylidene fluoride fluororubber including: 48 to 88 mol% of a structural unit derived from vinylidene fluoride and 0 to 10 mol% of a structural unit derived from tetrafluoroethylene to the total amount 100 mol% of structural units derived from all monomer components used for forming the fluororubber (A); and at least one structural unit selected from the group consisting of structural units derived from bis-olefins and structural units derived from compounds represented by general formula (1):

$$CY^1_2{=}CY^2R_f^1X^1 \qquad (1)$$

wherein $Y^1$ and $Y^2$ may be the same as or different from each other, and each of these is a fluorine atom, hydrogen atom, or $-CH_3$; $R_f^1$ is a linear or branched fluoroalkylene group which may have one or more ethereal oxygen atoms and have fluorine atoms substituted for a part or all of the hydrogen atoms; and $X^1$ is an iodine atom or a bromine atom.

The cross-linked fluororubber product has a loss modulus E" of 400 kPa or higher and 6,000 kPa or lower determined by a dynamic viscoelasticity test under conditions of a measurement temperature of 160°C, tensile strain of 1%, initial force of 157 cN, and frequency of 10 Hz.

Each of the elements will be described hereinbelow.

(A) Fluororubber

The fluororubber (A) of the present invention is a vinylidene fluoride fluororubber (VdF rubber) including 48 to 88 mol% of a structural unit (VdF unit) derived from vinylidene fluoride (VdF) to the total amount 100 mol% of structural units derived from all monomer components used for forming the fluororubber (A); and at least one structural unit selected from the group consisting of structural units derived from bis-olefins and structural units derived from compounds represented by general formula (1) :

$$CY^1_2{=}CY^2R_f^1X^1 \qquad (1)$$

wherein $Y^1$ and $Y^2$ may be the same as or different from each other, and each of these is a fluorine atom, hydrogen atom, or $-CH_3$; $R_f^1$ is a linear or branched fluoroalkylene group which may have one or more ethereal oxygen atom and have fluorine atoms substituted for a part or all of the hydrogen atoms; and $X^1$ is an iodine atom or a bromine atom. If the fluororubber (A) has a tetrafluoroethylene (TFE) unit, the content thereof is 10 mol% or less.

The VdF rubber has 48 to 88 mol% of a structural unit derived from VdF and 10 mol% or less of a structural

unit derived from tetrafluoroethylene. Comonomers in the VdF rubber are not particularly limited as long as they are copolymerizable with VdF. Examples thereof include fluorine-containing monomers such as TFE, hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, and a fluorine-containing monomer represented by formula (2):

$$CH_2=CFR_f \qquad (2)$$

wherein $R_f$ is a C1-C12 linear or branched fluoroalkyl group; fluorine-free monomers such as ethylene (Et), propylene (Pr), and alkyl vinyl ethers; monomers giving a cross-linkable group (a curing site); and a reactive emulsifier. Each of these monomers and compounds may be used alone, or two or more of these may be used in combination.

The PAVE is preferably perfluoro(methyl vinyl ether) (PMVE) or perfluoro(propyl vinyl ether) (PPVE), and is particularly preferably PMVE.

The PAVE may be a perfluorovinyl ether represented by the formula (3): $CF_2=CFOCF_2OR_f^2$ (3) wherein $R_f^2$ is a C1-C6 linear or branched perfluoroalkyl group, a C5-C6 cyclic perfluoroalkyl group, or a C2-C6 linear or branched perfluorooxyalkyl group having 1 to 3 oxygen atoms. The PAVE is preferably $CF_2=CFOCF_2OCF_3$, $CF_2=CFOCF_2OCF_2CF_3$, or $CF_2=CFOCF_2OCF_2CF_2OCF_3$.

The fluorine-containing monomer of formula (2) is preferably a monomer whose $R_f$ is a linear fluoroalkyl group, and more preferably a monomer whose $R_f$ is a linear perfluoroalkyl group. The carbon number of $R_f$ is preferably 1 to 6. Examples of the fluorine-containing monomer of formula (2) include $CH_2=CFCF_3$, $CH_2=CFCF_2CF_3$, $CH_2=CFCF_2CF_2CF_3$, and $CH_2=CFCF_2CF_2CF_2CF_3$. Preferable among these is 2,3,3,3-tetrafluoropropylene represented as $CH_2=CFCF_3$.

The VdF rubber is preferably at least one copolymer selected from the group consisting of a VdF/HFP copolymer, VdF/CTFE copolymer, VdF/CTFE/TFE copolymer, VdF/PAVE copolymer, VdF/HFP/TFE copolymer, VdF/PAVE/TFE copolymer, VdF/HFP/PAVE copolymer, VdF/HFP/TFE/PAVE copolymer, VdF/TFE/propylene (Pr) copolymer, VdF/ethylene (Et)/HFP copolymer, and a copolymer of VdF/fluorine-containing monomer of formula (2). Further, the rubber is more preferably one having at least one copolymer selected from the group consisting of TFE, HFP, and PAVE as comonomers other than VdF. Preferable among these is at least one copolymer selected from the group consisting of a VdF/HFP copolymer, copolymer of VdF/fluorine-containing monomer of formula (2), VdF/PAVE copolymer, VdF/HFP/TFE copolymer, VdF/PAVE/TFE copolymer, VdF/HFP/PAVE copolymer, and VdF/HFP/TFE/PAVE copolymer. More preferable among these is at least one copolymer selected from the group consisting of a VdF/HFP copolymer, VdF/HFP/TFE copolymer, copolymer of VdF/fluorine-containing monomer of formula (2), and VdF/PAVE copolymer. Particularly preferable among these is at least one copolymer selected from the group consisting of a VdF/HFP copolymer, copolymer of VdF/fluorine-containing monomer of formula (2), and VdF/PAVE copolymer.

In the VdF/HFP copolymer, the composition of VdF/HFP is preferably (50 to 80) / (50 to 20) (mol%), and further preferably (60 to 80)/(40 to 20) (mol%).

In the VdF/HFP copolymer, the composition of VdF/HFP is also preferably (48 to 85)/(52 to 15) (mol%), more preferably (50 to 78)/(50 to 22) (mol%), and further preferably (55 to 77) / (45 to 23) (mol%).

In the VdF/PAVE copolymer, the composition of VdF/PAVE is also preferably (48 to 85)/(52 to 15) (mol%), more preferably (50 to 78)/(50 to 22) (mol%), and further preferably (55 to 77)/(45 to 23) (mol%).

In the VdF/HFP/TFE copolymer, the composition of VdF/HFP/TFE is preferably (48 to 85)/(52 to 15)/(1 to 10) (mol%), more preferably (50 to 78)/(50 to 22)/(1 to 9) (mol%), and further preferably (55 to 77) / (45 to 23)/(1 to 8) (mol%).

In the VdF/PAVE/TFE copolymer, the composition of VdF/PAVE/TFE is also preferably (48 to 85)/(52 to 15)/(1 to 10) (mol%), more preferably (50 to 78)/(50 to 22)/(1 to 9) (mol%), and further preferably (55 to 77) / (45 to 23) / (1 to 8) (mol%).

In the VdF/HFP/PAVE copolymer, the composition of VdF/HFP/PAVE is also preferably (48 to 85)/(15 to 52)/(1 to 25) (mol%), more preferably (50 to 78)/(22 to 50)/(1 to 20) (mol%), and further preferably (55 to 77) / (23 to 45) / (1 to 15) (mol%).

In the VdF/HFP/TFE/PAVE copolymer, the composition of VdF/HFP/TFE/PAVE is also preferably (48 to 85)/(15 to 52) / (1 to 10) / (1 to 25) (mol%), more preferably (50 to 78) / (22 to 50) / (1 to 9) / (1 to 20) (mol%), and further preferably (55 to 77) / (23 to 45) / (1 to 8) / (1 to 15) (mol%).

The mol% ratio of the VdF/fluorine-containing monomer (2) units is also preferably 48/52 to 85/15. The mol% ratio of the VdF/fluorine-containing monomer (2) units is further preferably 55/45 to 77/23, and the amount of monomer units other than the VdF and fluorine-containing monomer (2) units is further preferably 0 to 45 mol% in all of the monomer units. The monomers other than the VdF and fluorine-containing monomer (2) units are preferably the monomers listed above as the comonomers for VdF, that is, TFE, HFP, PMVE, perfluoroethyl vinyl ether (PEVE), PPVE, CTFE, trifluoroethylene, hexafluoroisobutene, vinyl fluoride, ethylene (Et), propylene (Pr), alkyl vinyl ether, monomers giving a cross-linkable group, and a reactive emulsifier. More preferable among these are PMVE, CTFE, HFP, and TFE.

If the monomer other than the VdF and fluorine-containing monomer (2) is TFE, the amount of the TFE unit is 0 to 10 mol%, preferably 0 to 9 mol%, more preferably 0 to 8 mol% to the total amount 100 mol% of all of the monomer units.

The fluororubber (A) preferably has a number average molecular weight Mn of 5,000 to 500,000, more preferably 10,000 to 500,000, and particularly preferably 20,000 to 500,000.

The above-described non-perfluoro fluororubber and perfluoro fluororubber may be produced by a common method such as emulsion polymerization, suspension polymerization, or solution polymerization. In particular, a polymerization method using an iodine (bromine) compound, which is known as iodine (bromine) transfer polymerization, can provide a fluororubber having a narrow molecular weight distribution.

In order to provide a fluororubber composition having a low viscosity, for example, other species of fluororubbers may be blended with the fluororubber (A). Examples of other fluororubbers include low molecular weight liquid fluororubbers (number average molecular weight: 1,000 or more), low molecular weight fluororubbers having a number average molecular weight of about 10,000, and fluororubbers having a number average molecular weight of about 100,000 to about 200,000.

The listed monomers in the fluororubber are examples of the main monomers of the rubber. The fluororubber of the present invention is obtained by copolymerizing at least one compound, as monomers giving a cross-linkable group, selected from the group consisting of bis-olefin compounds and compounds represented by formula (1):

$$CY^1_2=CY^2R_f^1X^1 \qquad (1)$$

wherein $Y^1$ and $Y^2$ may be the same as or different from each other, and each of these is a fluorine atom, hydrogen atom, or $-CH_3$; $R_f^1$ is a linear or branched fluoroalkylene group which may have one or more ethereal oxygen atoms and which may have one or more aromatic rings, and in which part or all of the hydrogen atoms are replaced by fluorine atoms; and $X^1$ is an iodine atom or a bromine atom. Thus, the fluororubber has a specific cross-linkable group, and therefore in addition to strength at high temperature and elongation at high temperature, the fluororubber is expected to have excellent physical properties (creep characteristics) in a below-mentioned repeated high-temperature tensile test (permanent elongation measurement).

The amount of the compound (1) unit represented by formula (1) is preferably 0.05 to 5% by mass to the total amount of the fluororubber. The lower limit of the amount of the compound (1) unit is preferably 0.3% by mass, and further preferably 0.5% by mass, to the total amount of the fluororubber. The upper limit of the amount of the compound (1) unit is preferably 4% by mass, more preferably 3% by mass, further preferably 2% by mass, and particularly preferably 1.5% by mass.

The amount of the bis-olefin unit is preferably 0.01 to 2.0 mol% to the total amount of monomers other than bis-olefins. The lower limit of the amount of the bis-olefin unit is preferably 0.03 mol%, and further preferably 0.05 mol% to the total amount of monomers other than bis-olefins. The upper limit of the amount of the bis-olefin unit is preferably 1.0 mol%, further preferably 0.8 mol%, and particularly preferably 0.5 mol%.

Specific examples thereof include: iodine-containing monomers and bromine-containing monomers represented by formula (4):

$$CY^1_2=CY^2R_f^3CHR^1\text{-}X^1 \qquad (4)$$

wherein $Y^1$, $Y^2$, and $X^1$ are the same as defined above; $R_f^3$ is a linear or branched fluorine-containing alkylene group which may have one or more ethereal oxygen atoms and in which part or all of the hydrogen atoms are replaced by fluorine atoms, in other words, $R_f^3$ is a linear or branched fluorine-containing alkylene group in which part or all of the hydrogen atoms are replaced by fluorine atoms, a linear or branched fluorine-containing oxyalkylene group in which part or all of the hydrogen atoms are replaced by fluorine atoms, or linear or branched fluorine-containing polyoxyalkylene group in which part or all of the hydrogen atoms are replaced by fluorine atoms; $R^1$ is a hydrogen atom or a methyl group; and iodine-containing monomers and bromine-containing monomers represented by formulae (5) to (22) :

$$CY^4_2=CY^4(CF)_n\text{-}X^1 \qquad (5)$$

wherein $Y^4$S may be the same as or different from each other, and each of these is a hydrogen atom or a fluorine atom; n is an integer of 1 to 8,

$$CF_2=CFCF_2R_f^4\text{-}X^1 \qquad (6)$$

wherein

$R_f^4$ is $\{OCF_2\}_n$, $\{OCF(CF_3)\}_n$ ; n is an integer of 0 to 5;

$CF_2=CFCF_2\ (OCF\ (CF_3)\ CF_2)_m\ (OCH_2CF_2CF_2)_nOCH_2CF_2\text{-}X^1$ (7)

wherein m is an integer of 0 to 5; n is an integer of 0 to 5;

$CF_2=CFCF_2\ (OCH_2CF_2CF_2)_m\ (OCF\ (CF_3)CF_2)_nOCF(CF_3)\text{-}X^1$ (8)

wherein m is an integer of 0 to 5; n is an integer of 0 to 5;

$CF_2=CF(OCF_2CF(CF_3))_mO(CF_2)_n\text{-}X^1$ (9)

wherein m is an integer of 0 to 5; n is an integer of 1 to 8;

$CF_2=CF(OCF_2CF(CF_3))_m\text{-}X^1$ (10)

wherein m is an integer of 1 to 5;

$CF_2=CFOCF_2(CF(CF_3)OCF_2)_nCF(\text{-}X^1)CF_3$ (11)

wherein n is an integer of 1 to 4;

$CF_2=CFO(CF_2)_nOCF(CF_3)\text{-}X^1$ (12)

wherein n is an integer of 2 to 5;

$CF_2=CFO(CF_2)_n\text{-}\ (C_6H_4)\ \text{-}X^1$ (13)

wherein n is an integer of 1 to 6;

$CF_2=CF(OCF_2CF(CF_3))_nOCF_2CF(CF_3)\text{-}X^1$ (14)

wherein n is an integer of 1 to 2;

$CH_2=CFCF_2O(CF(CF_3)CF_2O)_nCF(CF_3)\text{-}X^1$ (15)

wherein n is an integer of 0 to 5;

$CF_2=CFO(CF_2CF(CF_3)O)_m(CF_2)_n\text{-}X^1$ (16)

wherein m is an integer of 0 to 5; n is an integer of 1 to 3;

$CH_2=CFCF_2OCF(CF_3)OCF(CF_3)\text{-}X^1$ (17)

$CH_2=CFCF_2OCH_2CF_2\text{-}X^1$ (18)

$CF_2=CFO(CF_2CF(CF_3)O)_mCF_2CF(CF_3)\text{-}X^1$ (19)

wherein m is an integer of 0 or greater;

$CF_2=CFOCF(CF_3)CF_2O(CF_2)_n\text{-}X^1$ (20)

wherein n is an integer of 1 or greater;

$CF_2=CFOCF_2OCF_2CF\ (CF_3)\ OCF_2\text{-}X^1$ (21)

$CH_2=CH\text{-}(CF_2)nX^1$ (22)

wherein n is an integer of 2 to 8;
in formulae (5) to (22), $X^1$ is the same as defined above. Each of these may be used alone, or any of these may be used

in combination.

The iodine-containing monomer or the bromine-containing monomer represented by formula (4) is preferably an iodine-containing fluorinated vinyl ether represented by formula (23):

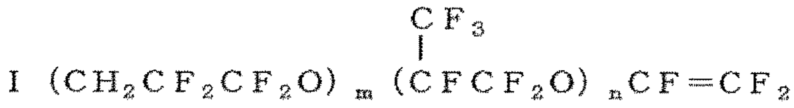

(23)

wherein m is an integer of 1 to 5; n is an integer of 0 to 3. More specific examples thereof include those represented as follows.

$I\ CH_2CF_2CF_2OCF=CF_2$, $I\ (CH_2CF_2CF_2O)_2CF=CF_2$, $I\ (CH_2CF_2CF_2O)_3CF=CF_2$,

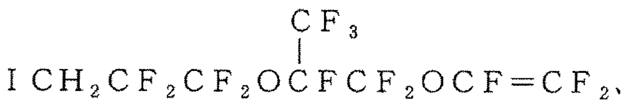

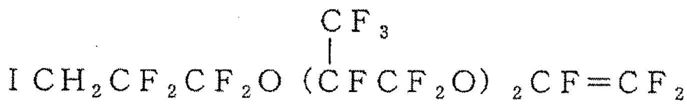

Preferable among these is $ICH_2CF_2CF_2OCF=CF_2$.

More specifically, preferable examples of the iodine-containing monomer and the bromine-containing monomer represented by formula (5) include $ICF_2CF_2CF=CH_2$ and $I\ (CF_2CF_2)_2CF=CH_2$.

More specifically, preferable examples of the iodine-containing monomer and the bromine-containing monomer represented by formula (9) include $I\ (CF_2CF_2)_2OCF=CF_2$.

More specifically, preferable examples of the iodine-containing monomer and the bromine-containing monomer represented by formula (22) include $CH_2=CHCF_2CF_2I$ and $I\ (CF_2CF_2)_2CH=CH_2$.

Further, a bis-olefin compound represented by formula: $R^2R^3C=CR^4\text{-}Z\text{-}CR^5=CR^6R^7$ wherein $R^2$, $R^3$, $R^4$, $R^5$, $R^6$, and $R^7$ may be the same as or different from each other, and each of these is H or a C1-C5 alkyl group; Z is a C1-C18 linear or branched alkylene or cycloalkylene group which may have an oxygen atom and which is preferably at least partially fluorinated, or a (per)fluoropolyoxyalkylene group, is also preferable as a monomer giving a cross-linkable group. The term "(per)fluoropolyoxyalkylene group" herein means a fluoropolyoxyalkylene group or a perfluoropolyoxyalkylene group.

Z is preferably a C4-C12 (per)fluoroalkylene group; $R^2$, $R^3$, $R^4$, $R^5$, $R^6$, and $R^7$ are preferably a hydrogen atom.

In the case that Z is a (per)fluoropolyoxyalkylene group, it is preferably a (per)fluoropolyoxyalkylene group represented by formula:

$$-(Q)_p\text{-}CF_2O\text{-}(CF_2CF_2O)_m\text{-}(CF_2O)_n\text{-}CF_2\text{-}(Q)_p\text{-}$$

wherein Q is a C1-C10 alkylene group or a C2-C10 oxyalkylene group; p is 0 or 1; m and n are integers which give an m/n ratio of 0.2 to 5 and a molecular weight of the (per)fluoropolyoxyalkylene group of 500 to 10,000, preferably 1,000 to 4,000. In this formula, Q is preferably selected from $-CH_2OCH_2-$ and $-CH_2O(CH_2CH_2O)_sCH_2-$ wherein s = 1 to 3.

Preferable examples of the bis-olefin include $CH_2=CH\text{-}(CF_2)_4\text{-}CH=CH_2$, $CH_2=CH\text{-}(CF_2)_6\text{-}CH=CH_2$, and those represented by formula:

$$CH_2=CH\text{-}Z^1\text{-}CH=CH_2$$

wherein $Z^1$ is $-CH_2OCH_2\text{-}CF_2O\text{-}(CF_2CF_2O)_m\text{-}(CF_2O)_n\text{-}CF_2\text{-}CH_2OCH_2-$, wherein m/n is 0.5.

Preferable among these is 3,3,4,4,5,5,6,6,7,7,8,8-dodecafluoro-1,9-decadiene represented as $CH_2=CH\text{-}(CF_2)_6\text{-}CH=CH_2$.

From the viewpoint of processability, the fluororubber (A) preferably has a Mooney viscosity at 100°C of within a range of 20 to 200, and further preferably 30 to 180. The Mooney viscosity is measured in accordance with ASTM-D1646 and JIS K 6300.

(B) Carbon black

In the present invention, the carbon black (B) is not particularly limited as long as it is a carbon black providing a loss modulus E" in the above range and a storage modulus E' in the above range.

Examples of such a carbon black include furnace black, acetylene black, thermal black, channel black, and graphite. Specific examples thereof include SAF-HS ($N_2SA$: 142 $m^2/g$, DBP: 130 ml/100 g), SAF ($N_2SA$: 142 $m^2/g$, DBP: 115 ml/100 g), N234 ($N_2SA$: 126 $m^2/g$, DBP: 125 ml/100 g), ISAF ($N_2SA$: 119 $m^2/g$, DBP: 114 ml/100 g), ISAF-LS ($N_2SA$: 106 $m^2/g$, DBP: 75 ml/100 g), ISAF-HS ($N_2SA$: 99 $m^2/g$, DBP: 129 ml/100 g), N339 ($N_2SA$: 93 $m^2/g$, DBP: 119 ml/100 g), HAF-LS ($N_2SA$: 84 $m^2/g$, DBP: 75 ml/100 g), HAS-HS ($N_2SA$: 82 $m^2/g$, DBP: 126 ml/100 g), HAF ($N_2SA$: 79 $m^2/g$, DBP: 101 ml/100 g), N351 ($N_2SA$: 74 $m^2/g$, DBP: 127 ml/100 g), LI-HAF ($N_2SA$: 74 $m^2/g$, DBP: 101 ml/100 g), MAF-HS ($N_2SA$: 56 $m^2/g$, DBP: 158 ml/100 g), MAF ($N_2SA$: 49 $m^2/g$, DBP: 133 ml/100 g), FEF-HS ($N_2SA$: 42 $m^2/g$, DBP: 160 ml/100 g), FEF ($N_2SA$: 42 $m^2/g$, DBP: 115 ml/100 g), SRF-HS ($N_2SA$: 32 $m^2/g$, DBP: 140 ml/100 g), SRF-HS ($N_2SA$: 29 $m^2/g$, DBP: 152 ml/100 g), GPF ($N_2SA$: 27 $m^2/g$, DBP: 87 ml/100 g), SRF ($N_2SA$: 27 $m^2/g$, DBP: 68 ml/100 g), SRF-LS ($N_2SA$: 23 $m^2/g$, DBP: 51 ml/100 g), FT ($N_2SA$: 19 $m^2/g$, DBP: 42 ml/100 g), and MT ($N_2SA$: 8 $m^2/g$, DBP: 43 ml/100 g). Each of these carbon blacks may be used alone, or two or more of these may be used in combination.

The carbon black is a carbon black having a nitrogen adsorption specific surface area ($N_2SA$) of 10 to preferably 180 $m^2/g$ and a dibutyl phthalate (DBP) oil absorption of 40 to 180 ml/100 g. If a carbon black used has high $N_2SA$ and/or DBP value, the values of the loss modulus E" and the storage modulus E' will be high.

If the nitrogen adsorption specific surface area ($N_2SA$) is smaller than 5 $m^2/g$, the mechanical properties of rubber tend to be poor in the case that the carbon black is mixed into the rubber. From this viewpoint, the nitrogen adsorption specific surface area ($N_2SA$) is 10 $m^2/g$ or larger, preferably 20 $m^2/g$ or larger, and more preferably 25 $m^2/g$ or larger. The upper limit thereof is preferably 180 $m^2/g$ because of easy availability in general.

If the dibutyl phthalate (DBP) oil absorption is lower than 40 ml/100 g, the mechanical properties of rubber tend to be poor in the case that the carbon black is mixed into the rubber. From this viewpoint, the DBP oil absorption is preferably 50 ml/100 g or higher, further preferably 60 ml/100 g or higher, and particularly preferably 80 ml/100 g or higher. The upper limit thereof is preferably 175 ml/100 g, and further preferably 170 ml/100 g because of easy availability in general.

The amount of the carbon black (B) is preferably 5 to 50 parts by mass to 100 parts by mass of the fluororubber (A). Too large an amount of the carbon black (B) tends to cause poor mechanical properties. In contrast, too small an amount of the carbon black (B) tends to cause poor mechanical properties. For good balance of physical properties, the amount thereof is preferably 6 parts by mass or more, and more preferably 10 parts by mass or more, to 100 parts by mass of the fluororubber (A). For good balance of physical properties, the amount thereof is preferably 49 parts by mass or less and, in particular, more preferably 45 parts by mass or less.

In order to obtain the formed product of the present invention, a fluororubber composition is suitably used that has a difference $\delta G'$ (G' (1%) - G' (100%)) between the shear modulus G' (1%) at 1% dynamic strain and the shear modulus G' (100%) at 100% dynamic strain of 120 kPa or higher and 3,000 kPa or lower determined by a dynamic viscoelasticity test (measurement temperature of 100°C and measurement frequency of 1 Hz) with a rubber process analyzer (RPA) before cross-linking.

The difference $\delta G'$ is used as a standard for evaluating the property of reinforcement of the rubber composition, and it is determined by a dynamic viscoelasticity test with a rubber process analyzer.

A fluororubber composition having a difference $\delta G'$ in the range of 120 kPa or higher and 3,000 kPa or lower has an advantageous normal state at room temperature, mechanical properties at high temperatures.

The difference $\delta G'$ is preferably 150 kPa or higher, and further preferably 160 kPa or higher, for good normal state at room temperature, mechanical properties at high temperatures, and the like. In contrast, it is preferably 2,800 kPa or lower, and further preferably 2,500 kPa or lower, for a good normal state at room temperature, hardness, viscosity upon extrusion molding, mechanical properties at high temperatures.

The fluororubber composition having a difference $\delta G'$ of 120 kPa or higher and 3,000 kPa or lower may be prepared using a mixer or a roll mixer.

More specifically, the following methods may be adopted; the method is not limited to these methods.

(1) A method in which predetermined amounts of a fluororubber (A) and a carbon black (B), and if necessary the below-mentioned organic amine compound and/or acid acceptor, are charged into a closed mixer, and then mixed at an average shear rate of a rotor of 50 to 1,000 (1/second), preferably 100 to 1,000 (1/second), and further preferably 200 to 1,000 (1/second) at the highest temperature Tm upon mixing of 80 to 220°C (preferably 120°C to 200°C) (in other words, mixing is preferably carried out under the condition that a mixed product has a highest temperature Tm of 80 °C to 220 °C while being mixed and being discharged. The same applies below). Examples of the closed mixer include a pressurizing kneader, Banbury mixer, single screw mixer, and twin screw mixer.

(2) A method in which predetermined amounts of a fluororubber (A) and a carbon black (B), and if necessary the

below-mentioned organic amine compound and/or acid acceptor, are charged into a roll mixer, and then mixed under the conditions that the average shear rate of a rotor is 50 (1/second) or higher and the highest mixing temperature Tm is to be 80°C to 220°C (preferably, 120°C to 200°C).

The fluororubber compositions obtained by the above methods (1) and (2) are free from components such as a cross-linking agent (C) and a cross-linking accelerator (D). Further, the mixing of the methods (1) and (2) may be performed multiple times. In the case of performing the mixing multiple times, the mixing conditions of the second and further subsequent mixing may be the same as those in the methods (1) and (2) except that the highest temperature Tm upon mixing is 140°C or lower.

One example of the method for preparing a cross-linkable fluororubber composition used in the present invention is a method in which the fluororubber composition obtained in the method (1) or (2), or obtained by repeating the method (1) or (2) multiple times, is further blend-mixed with a cross-linking agent (C) and a cross-linking accelerator (D).

The cross-linking agent (C) and the cross-linking accelerator (D) may be blend-mixed at the same time, or the cross-linking accelerator (D) may be first blend-mixed and then the cross-linking agent (C) may be blend-mixed. The conditions for mixing the cross-linking agent (C) and the cross-linking accelerator (D) may be the same as those in the methods (1) and (2) except that the highest mixing temperature Tm is 130°C or lower.

Another example of the method for preparing a cross-linkable fluororubber composition is a method in which predetermined amounts of a fluororubber (A), carbon black (B), cross-linking agent (C), and/or cross-linking accelerator (D) are charged into a roll mixer in an appropriate order, and then mixed under the conditions that the average shear rate of a rotor is 50 (1/second) or higher and the highest mixing temperature Tm is 130°C or lower.

The range of the difference $\delta G'$ is preferably satisfied in the fluororubber composition before mixed with a cross-linking agent (C) and/or a cross-linking accelerator (D). Further, the difference $\delta G'$ is also preferably within the above range even in the fluororubber composition containing a cross-linking agent (C) and/or a cross-linking accelerator (D).

In order to obtain a cross-linked fluororubber product having the aforementioned specific loss modulus E" and storage modulus E', the average shear rate is preferably 50 (1/second) or higher. An average shear rate of 50 (1/second) or higher provides a desired normal state at room temperature and mechanical properties at high temperatures.

The average shear rate (1/second) is calculated by the following formula.

$$\text{Average shear rate (1/second)} = (\pi \times D \times R)/(60 \text{ (seconds)} \times c)$$

wherein

D: rotor diameter or roll diameter (cm)
R: rotation rate (rpm)
c: tip clearance (cm, gap distance between rotor and casing or gap distance between rolls)

The cross-linking agent (C) and/or the cross-linking accelerator (D) may be appropriately selected depending on the cross-link system, the type of the fluororubber (A) to be cross-linked (e.g. composition of copolymerization, presence of a cross-linkable group and the type thereof), the specific applications and the modes of a cross-linked product to be used, the mixing conditions.

The cross-link system is, a peroxide cross-link system.

The cross-linking agent of the peroxide cross-link system may be any peroxide capable of easily generating a peroxy radical in the presence of heat or a redox system. Specific examples thereof include organic peroxides such as 1,1-bis(t-butylperoxy)-3,5,5-trimethylcyclohexane, 2,5-dimethylhexane-2,5-dihydroperoxide, di-t-butyl peroxide, t-butylcumyl peroxide, dicumyl peroxide, $\alpha,\alpha$-bis(t-butylperoxy)-p-diisopropylbenzene, $\alpha,\alpha$-bis(t-butylperoxy)-m-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxybenzoate, t-butylperoxy maleic acid, and t-butylperoxyisopropyl carbonate. Preferable among these is 2,5-dimethyl-2,5-di(t-butylperoxy)hexane or 2,5-dimethyl-2,5-di(t-butylperoxy)-hexyne-3.

Further, in the peroxide cross-link system, it is preferable to use a cross-linking accelerator, in general. Examples of the cross-linking accelerator for peroxide cross-linking agents, especially organoperoxide cross-linking agents, include triallyl cyanurate, triallyl isocyanurate (TAIC), triacryl formal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinyl methyltrisiloxane, tri(5-norbornene-2-methylene)cyanurate, and triallyl phosphite. Preferable among these is triallyl isocyanurate (TAIC) from the viewpoints of its cross-linkability and physical properties of cross-linked products.

From the viewpoint of cross-linkability, the fluororubber (A) suitable for the peroxide cross-link system is preferably a fluororubber having an iodine atom and/or a bromine atom as a cross-linking point. For good balance of physical properties, the amount of an iodine atom and/or a bromine atom is preferably 0.001 to 10% by weight, further preferably 0.01 to 5% by weight, and particularly preferably 0.1 to 3% by weight.

The amount of the peroxide cross-linking agent is preferably 0.01 to 10 parts by mass, more preferably 0.1 to 9 parts by mass, and particularly preferably 0.2 to 8 parts by mass, to 100 parts by mass of the fluororubber (A). If the amount of the peroxide cross-linking agent is less than 0.01 parts by mass, cross-linking of the fluororubber (A) tends to insufficiently proceed. In contrast, if the amount thereof is more than 10 parts by mass, the balance of physical properties tends to be poor.

Further, the amount of the cross-linking accelerator is generally 0.01 to 10 parts by mass, and preferably 0.1 to 9 parts by mass, to 100 parts by mass of the fluororubber (A). If the amount of the cross-linking accelerator is less than 0.01 parts by mass, undercure tends to be caused. In contrast, if the amount thereof is more than 10 parts by mass, cross-linking tends to proceed too rapidly, as well as tends to cause poor balance of physical properties.

If necessary, the fluororubber composition of the present invention may further contain common additives for rubber such as filler, processing aid, plasticizer, colorant, tackifier, bonding aid, acid acceptor, pigment, flame retardant, lubricant, photo stabilizer, weather-resistant stabilizer, antistatic agent, ultraviolet absorber, antioxidant, release agent, foaming agent, perfume, oil, and softener, and other polymers such as polyethylene, polypropylene, polyamide, polyester, and polyurethane to the extent that the effects of the present invention are not deteriorated.

Examples of the filler include: metal oxides such as calcium oxide, titanium oxide, aluminum oxide, and magnesium oxide; metal hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; metal sulfides such as synthesized hydrotalcite; molybdenum disulfide, iron sulfide, and copper sulfide; diatomaceous earth, asbestos, lithopone (zinc sulfide/barium sulfide), graphite, carbon fluoride, calcium fluoride, coke, fine particulate quartz, talc, powdery mica, Wollastonite, fibrous carbon, fibrous aramid, various whiskers, fibrous glass, organic reinforcing agent, organic filler, polytetrafluoroethylene, mica, silica, celite, and clay. Further, examples of the acid acceptor include calcium oxide, magnesium oxide, lead oxide, zinc oxide, magnesium hydroxide, calcium hydroxide, aluminum hydroxide, and hydrotalcite. Each of these may be used alone, or two or more of these may be appropriately used in combination. These may be added at any step in the aforementioned mixing method; they are preferably added upon mixing the fluororubber and the carbon black with a closed mixer or a roll mixer.

Examples of the processing aid include: higher fatty acids such as stearic acid, oleic acid, palmitic acid, and lauric acid; higher fatty acid salts such as sodium stearate and zinc stearate; higher fatty acid amides such as stearamide and oleamide; higher fatty acid esters such as ethyl oleate; petroleum wax such as carnauba wax and ceresin wax; polyglycols such as ethylene glycol, glycerine, and diethylene glycol; aliphatic hydrocarbons such as vaseline and paraffin; silicone oils, silicone polymers, low molecular weight polyethylene, phthalic acid esters, phosphoric acid esters, rosin, (halogenated) dialkylamines, surfactants, sulfone compounds, fluorine aids, and organic amine compounds.

In particular, the organic amine compound and the acid acceptor are preferable additives because, in the case that they are blended upon mixing the fluororubber (A) and the carbon black (B) with a closed mixer or a roll mixer, they improve reinforceability. The mixing is preferably performed at the highest temperature Tm upon mixing of 80 to 220°C.

Preferable examples of the organic amine compound include primary amines represented as $R^1NH^2$, secondary amines represented as $R^1R^2NH$, and tertiary amine represented as $R^1R^2R^3N$. $R^1$, $R^2$, and $R^3$ may be the same as or different from each other and each of these is preferably a C1-C50 alkyl group. The alkyl group may have a benzene ring as a functional group, or may have a double bond and/or conjugated double bond. Further, the alkyl group may have a linear shape or a branched shape.

Examples of the primary amine include coconut amine, octyl amine, lauryl amine, stearyl amine, oleyl amine, beef tallow amine, 17-phenyl-heptadecylamine, octadeca-7,11-dienylamine, octadeca-7,9-dienylamine, octadec-9-enylamine, 7-methyl-octadec-7-enylamine. Examples of the secondary amine include distearylamine. Examples of the tertiary amine include dimethyloctylamine, dimethyldecylamine, dimethyllaurylamine, dimethylmyristylamine, dimethylpalmitylamine, dimethylstearylamine, and dimethylbehenylamine. Particularly preferable are amines, especially primary amines, having about 20 carbon atoms because they are easily available and they improve reinforceability.

The amount of the organic amine compound is preferably 0.01 to 5 parts by mass to 100 parts by mass of the fluororubber (A). Too large an amount of the organic amine compound tends to cause difficulty in mixing, while too small an amount thereof tends to cause poor reinforceability. The amount with respect to 100 parts by mass of the fluororubber (A) is further preferably 0.1 parts by mass or more from the viewpoint of reinforceability and 4 parts by mass or less from the viewpoints of reinforceability and easy mixing.

The acid acceptor is preferably a metal hydroxide such as calcium hydroxide; a metal oxide such as magnesium

oxide or zinc oxide; or hydrotalcite among the aforementioned examples from the viewpoint of reinforceability, for example, and it is particularly preferably zinc oxide.

The amount of the acid acceptor is preferably 0.01 to 10 parts by mass to 100 parts by mass of the fluororubber (A). Too large an amount of the acid acceptor tends to cause poor physical properties, while too small an amount thereof tends to cause poor reinforceability. The amount with respect to 100 parts by mass of the fluororubber (A) is further preferably 0.1 parts by mass or more from the viewpoint of reinforceability, while it is preferably 8 parts by mass or less, and more preferably 5 parts by mass or less, from the viewpoints of physical properties and easy mixing.

In the present invention, the fluororubber composition may be cross-linked or molded by an appropriately selected method. Examples of the method include common methods of cross-linking such as a cross-linking method using a vulcanizing pan and the like. Examples of the method also include such as a molding method by extrusion or wrapped cure. If the fluororubber composition needs to be subjected to secondary curing depending on the intended use of the cross-linked product to be obtained, the composition may be secondarily cured in an oven.

The obtained cross-linked fluororubber product has a particularly excellent normal state at room temperature and mechanical properties at high temperatures in the case of having a loss modulus E" at a tensile strain of 1% of 400 kPa or higher and 6000 kPa or lower determined by a dynamic viscoelasticity test (measurement mode of tensile, chuck distance of 20 mm, frequency of 10 Hz, initial force of 157 cN, and measurement temperature of 160°C).

If the loss modulus E" is within the above range, the cross-linked fluororubber product has a particularly excellent normal state at room temperature and mechanical properties at high temperatures. The lower limit thereof is preferably 420 kPa, and more preferably 430 kPa. The upper limit thereof is preferably 5,900 kPa, and more preferably 5,800 kPa.

For improved mechanical properties at high temperatures, the cross-linked fluororubber product further preferably has a storage modulus E' of 1,500 kPa or higher and 20,000 kPa or lower determined by a dynamic viscoelasticity test (measurement mode of tensile, chuck distance of 20 mm, measurement temperature of 160°C, tensile strain of 1%, initial force of 157 cN, and frequency of 10 Hz). The lower limit thereof is preferably 1,600 kPa, and more preferably 1,800 kPa, while the upper limit thereof is preferably 19,000 kPa, and more preferably 18,000 kPa.

The cross-linked fluororubber product preferably has an elongation at break at 160°C of 100% to 700%, more preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 160°C of 1 MPa or higher, further preferably 1.5 MPa or higher, and particularly preferably 2 MPa or higher, while preferably 30 MPa or lower, and particularly preferably 28 MPa or lower, because such a cross-linked product is suitably used under high-temperature conditions. The tensile strength at break and the elongation at break are measured using #6 dumbbells in accordance with JIS-K 6251.

The cross-linked fluororubber product preferably has a tearing strength at 160°C of 3 to 30 kN/m, further preferably 4 kN/m or higher, and particularly preferably 5 kN/m or higher, while preferably 29 kN/m or lower, and particularly preferably 28 kN/m or lower, because such a cross-linked product is suitably used under high-temperature conditions.

The cross-linked fluororubber product preferably has an elongation at break at 200°C of 100 to 700%, further preferably 110% or higher, and particularly preferably 120% or higher, while preferably 680% or lower, and particularly preferably 650% or lower, because such a cross-linked product is suitably used under high-temperature conditions.

The cross-linked fluororubber product preferably has a tensile strength at break at 200°C of 1 to 30 MPa, further preferably 1.5 MPa or higher, and particularly preferably 2 MPa or higher, while preferably 29 MPa or lower, and particularly preferably 28 MPa or lower, because such a cross-linked product is suitably used under high-temperature conditions.

The cross-linked fluororubber product preferably has a tearing strength at 200°C of 3 to 30 kN/m, further preferably 4 kN/m or higher, and particularly preferably 5 kN/m or higher, while preferably 29 kN/m or lower, and particularly preferably 28 kN/m or lower, because such a cross-linked product is suitably used under high-temperature conditions.

The fluororubber formed product of the present invention can be used for various applications, particularly suitably for the following applications.

(1) Hose

A hose may be a monolayer hose consisting of the cross-linked fluororubber product obtained by cross-linking the fluororubber composition of the present invention, or may be a multilayer hose having a laminated structure with other layers.

Examples of the monolayer hose include exhaust gas hoses, EGR hoses, turbo charger hoses, fuel hoses, brake hoses, and oil hoses.

Examples of the multilayer hose also include exhaust gas hoses, EGR hoses, turbo charger hoses, fuel hoses, brake hoses, and oil hoses.

Turbo systems are usually provided for diesel engines. In the turbo system, exhaust gas discharged from an engine is sent to a turbine so that the turbine is turned. Turning of the turbine drives a compressor coupled with the

turbine, and the compressor increases the compression ratio of the air supplied to the engine; as a result, the output of power increases. The turbo system, which utilizes exhaust gas from an engine and generates a high power, contributes to downsizing of an engine, low fuel consumption of an automobile, and purification of exhaust gas.

A turbo charger hose is used in the turbo system as a hose for sending compressed air into the engine. In order to effectively use the limited engine-room space, a rubber hose which is excellent in flexibility and softness is advantageous. Typically used hoses have a multilayer structure that an inner layer comprises a rubber (especially a fluororubber) layer excellent in heat-aging resistance and oil resistance and an outer layer comprises a silicone rubber or an acrylic rubber. However, the conditions of the engine and its vicinities such as the engine room are severe due to high temperature and vibration. Thus, the hose requires not only excellent heat-aging resistance but also excellent mechanical properties at high temperatures.

Hoses satisfy these required characteristics at high levels using a cross-linked fluororubber layer obtained by cross-linking the fluororubber composition of the present invention into a monolayer or multilayer rubber layer, and thus provide a turbo charger hose having excellent properties.

In multilayer hoses other than the turbo charger hose, layers made of other materials may be layers made of other rubbers, thermoplastic resin layers, fiber-reinforced layers, and metal foil layers, for example.

In the case that chemical resistance and flexibility are particularly required, the other rubbers are preferably at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer hose, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

Hoses produced from the cross-linked product of the present invention may be suitably used in the following fields.

In the fields relating to semiconductor production, e.g. semiconductor producing devices, liquid crystal panel producing devices, plasma panel producing devices, plasma-addressed liquid crystal panels, field emission display panels, and solar battery substrates, such a hose may be used as a hose for devices under high-temperature conditions such as CVD devices, dry etching devices, wet etching devices, oxidation diffusion devices, sputtering devices, ashing devices, washing devices, ion implanting devices, and gas discharging devices.

In the automobile field, the hose can be used as a hose in peripheral devices of engines and automatic transmissions, such as an EGR hose, an exhaust gas hose, a fuel hose, an oil hose, and a brake hose, as well as a turbo charger hose.

Furthermore, the hose can be used in the fields of aircraft, rockets and shipping, chemical plants, analysis/physical and chemical appliances, food plant appliances, nuclear plant appliances, and the like.

(2) Sealing material

Sealing materials can be suitably used in the following fields.

Sealing materials may be used, for example, for vehicles, specifically in the engine body, main driving system, valve gear system, lubricant and cooling system, fuel system, and air intake and exhaust system, of the engine; transmissions of the drive system; the steering system of the chassis; the braking system; and the basic electrical components, controlling electric components, and accessory electrical components. In such a field, the sealing material is required to have heat resistance, oil resistance, fuel oil resistance, engine antifreeze coolant resistance, and steam resistance. Examples of such a sealing material include gaskets and contact or non-contact packings (e.g. self-sealing packings, piston rings, split ring packings, mechanical seals, oil seals).

The sealing material used for the engine body of a vehicle engine is not particularly limited, and examples thereof include cylinder head gaskets, cylinder head cover gaskets, oil pan packings, general gaskets, O-rings, packings,

and timing belt cover gaskets.

Examples of the sealing material used for the main driving system of a vehicle engine include, but not particularly limited to, shaft seals such as a crank shaft seal and a cam shaft seal.

Examples of the sealing material used for the valve gear system of a vehicle engine include, but not particularly limited to, valve stem oil seals for an engine valve, and valve seats of a butterfly valve.

Examples of the sealing material used for the lubricant and cooling system of a vehicle engine include, but not particularly limited to, seal gaskets for an engine oil cooler.

Examples of the sealing material used for the fuel system of a vehicle engine include, but not particularly limited to, oil seals for a fuel pump, filler seals and tank packings for a fuel tank, connector O-rings for a fuel tube, injector cushion rings, injector seal rings, and injector O-rings for a fuel injection device, flange gaskets for a carburetor, and sealing materials for EGR.

Examples of the sealing material used for the air intake and exhaust system of a vehicle engine include, but not particularly limited to, intake manifold packings and exhaust manifold packings for a manifold, throttle body packings for a throttle, and turbine shaft seals for a turbo charger.

Examples of the sealing material used for the transmissions of a vehicle include, but not particularly limited to, bearing seals, oil seals, O-rings, and packings for a transmission; and O-rings and packings for an automatic transmission.

Examples of the sealing material used for the braking system of a vehicle include, but not particularly limited to, oil seals, O-rings, packings, piston cups (rubber cups) of master cylinders, caliper seals, and boots.

Examples of the sealing material used for the accessory electrical component of a vehicle include, but not particularly limited to, O-rings and packings for a car air-conditioner.

The sealing material is particularly suitable as a sealing material (bush) for a sensor, and more suitable as a sealing material for an oxygen sensor, a sealing material for a nitrogen oxide sensor, and a sealing material for a sulfur oxide sensor. O-rings herein may be square rings.

The sealing material may be applied to any field other than the field of vehicles. The sealing material can be used in a wide range of fields such as fields of aircraft, rocket, shipping, oil well drilling (e.g. packer seal, seal for MWD, seal for LWD), chemical products (e.g. plants), medical products (e.g. drugs), photographing (e.g. developing machines), printing (e.g. printing machines), coating (e.g. coating facility), analysis/physical and chemical appliances, food plant appliances, nuclear plant appliances, steals (e.g. steel plate processing equipment), general industries, electrics, fuel cells, electronic components, and forming in place.

Examples of such a sealing material include packings, O-rings, and other sealing materials having oil resistance, chemical resistance, heat resistance, steam resistance or weather resistance in transportation facilities such as ships and boats, and aircrafts; similar packings, O-rings, and other sealing materials in oil well drilling; similar packings, O-rings, and other sealing materials in chemical plants; similar packings, O-rings, and other sealing materials in food plant appliances and food appliances (including household products); similar packings, O-rings, and other sealing materials in nuclear plant appliances; and similar packings, O-rings, and other sealing materials in general industrial components.

(3) Belt

The fluororubber formed product of the present invention can be suitably used for the following belts.

That is, the cross-linked fluororubber product can be used for a belt of a power transmission belt (including flat belts, V belts, V-ribbed belts, and synchronous belts) or a belt for conveyance (conveyer belt). Further, In the fields relating to semiconductor production, e.g. semiconductor producing devices, liquid crystal panel producing devices, plasma panel producing devices, plasma-addressed liquid crystal panels, field emission display panels, and solar battery substrates, the cross-linked fluororubber product may be used as a belt for devices under high-temperature conditions such as CVD devices, dry etching devices, wet etching devices, oxidation diffusion devices, sputtering devices, ashing devices, washing devices, ion implanting devices, and gas discharging devices.

Examples of the flat belt include flat belts for high-temperature components such as ones arranged around the engine of an agricultural machine, a machine tool, an industrial machine, or the like. Examples of the conveyer belt include conveyer belts for conveying bulks and granules such as coal, crushed stones, earth and sand, mineral, and wood chips at high temperatures; conveyer belts used in a blast furnace or the like in iron works; and conveyer belts for use at high temperatures in a precision-instruments assembly plant, a food factory, or the like. Examples of the V belt and the V-ribbed belt include V belts and V-ribbed belts for agricultural machines, general machinery (e.g. OA equipment, a printing machine, business-use drier), and vehicles. Examples of the synchronous belt include synchronous belts such as transmission belts of transfer robots, and transmission belts for food machines and machine tools; and synchronous belts for vehicles, OA equipment, medical use, and printing machines. Specific examples of the synchronous belt for a vehicle include timing belts.

In multilayer belts, layers made of other materials may be layers made of other rubbers, thermoplastic resin layers, fiber-reinforced layers, canvas, and metal foil layers, for example.

In the case that chemical resistance and flexibility are particularly required, other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer belt, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(4) Vibration-insulating rubber

The fluororubber formed product of the present invention satisfies the required characteristics of a vibration-insulating rubber at high levels using the cross-linked fluororubber product as a monolayer or multilayer rubber layer, and thus provides a vibration-insulating rubber for a vehicle which has excellent properties.

In multilayer vibration-insulating rubber other than the one for a vehicle, layers made of other materials may be layers made of other rubbers, thermoplastic resin layers, fiber-reinforced layers, and metal foil layers, for example.

In the case that chemical resistance and flexibility are particularly required, other rubbers preferably include at least one selected from the group consisting of acrylonitrile-butadiene rubber and hydrogenated rubber thereof, rubber blend of acrylonitrile-butadiene rubber and polyvinyl chloride, fluororubber, epichlorohydrin rubber, EPDM, and acrylic rubber. They more preferably include at least one selected from the group consisting of acrylonitrile-butadiene rubber and hydrogenated rubber thereof, rubber blend of acrylonitrile-butadiene rubber and polyvinyl chloride, fluororubber, and epichlorohydrin rubber.

Further, the thermoplastic resin is preferably a thermoplastic resin comprising at least one selected from the group consisting of fluororesin, polyamide resin, polyolefin resin, polyester resin, polyvinyl alcohol resin, polyvinyl chloride resin, and polyphenylene sulfide resin. The thermoplastic resin is more preferably a thermoplastic resin comprising at least one selected from the group consisting of fluororesin, polyamide resin, polyvinyl alcohol resin, and polyphenylene sulfide resin.

In the case of forming a multilayer vibration-insulating rubber, surface treatment may be optionally performed. The surface treatment is not particularly limited as long as it allows bonding. Examples thereof include discharging treatment such as plasma discharge and corona discharge, and wet treatment such as treatment with a metallic sodium/naphthalene solution. Further, priming is suitable as surface treatment. Priming can be performed in accordance with a common method. In the case of priming, the surface of a fluororubber which is not surface-treated may be treated. Still, it is more effective to perform priming after prior treatment such as plasma discharge, corona discharge, or treatment with a metallic sodium/naphthalene solution.

(5) Diaphragm

The fluororubber formed product of the present invention is suitable for the diaphragms described below.

Examples of the diaphragms include those for vehicle engines, specifically those used in the fuel system, exhaust system, braking system, drive system, and ignition system, which need to have heat resistance, oxidation resistance, fuel resistance, and low gas permeability.

Examples of the diaphragms used in the fuel system of a vehicle engine include: diaphragms for fuel pumps, diaphragms for carburetors, diaphragms for pressure regulators, diaphragms for pulsation dampers, diaphragms for ORVR, diaphragms for canisters, and diaphragms for auto fuel cocks.

Examples of the diaphragms used in the exhaust system of a vehicle engine include: diaphragms for waste gates, diaphragms for actuators, and diaphragms for EGR.

Examples of the diaphragms used in the braking system of a vehicle engine include diaphragms for air braking.

Examples of the diaphragms used in the drive system of a vehicle engine include diaphragms for oil pressure.

Examples of the diaphragms used in the ignition system of a vehicle engine include diaphragms for distributors.

Examples of the diaphragms in addition to those for vehicle engines includes: diaphragms for general pumps, diaphragms for valves, diaphragms for filter press, diaphragms for blower, diaphragms for air conditioners, diaphragms for control equipments, diaphragms for water supply, diaphragms for pumps transferring hot water used for hot-water supply, diaphragms for high-temperature steam, diaphragms for semiconductor devices (for example, diaphragms for transferring chemicals used in a manufacturing process), diaphragms for food-processing devices, diaphragms for liquid storage tanks, diaphragms for pressure switches, diaphragms used oil exploration and oil drilling (for example, diaphragms for lubricant oil supply, such as oil drill bits), diaphragms for gas appliances such as instantaneous gas water heaters and gas meters, diaphragms for accumulators, diaphragms for air springs such as suspensions, diaphragms for screw feeders for ships and boats, and diaphragms for medical artificial hearts, which need to have heat resistance, oil resistance, chemical resistance, steam resistance, and low gas permeability.

EXAMPLES

The present invention will be described referring to, the following examples.

Measurement methods of physical properties adopted in the present invention are as follows.

(1) Dynamic viscoelasticity test

(A) Dynamic viscoelasticity measurement before cross-linking (shear modulus G')

Measurement method of difference $\delta G'$ between shear modulus G' (1%) at 1% dynamic strain and shear modulus G' (100%) at 100% dynamic strain

The viscoelasticity is measured using a rubber process analyzer (model: RPA 2000) produced by Alpha Technology Co., Ltd. at 100°C and 1 Hz.

(B) Dynamic viscoelasticity measurement of cross-linked product (storage modulus E' and loss modulus E")

Measurement device: Dynamic viscoelasticity measurement device DVA-220 (IT Keisoku Seigyo K.K.)

Measurement conditions

Specimen: cross-linked rubber cuboid having a size of 3 mm in width x 2 mm in thickness
Measurement mode: tensile
Chuck distance: 20 mm
Measurement temperature: 160°C
Tensile strain: 1%
Initial force: 157 cN
Frequency: 10 Hz

(2) Tensile strength at break, elongation at break

The test devices to be used are RTA-1T produced by Orientec Co., Ltd. and AG-I produced by Shimadzu Corporation. The tensile strength at break and the elongation at break are measured using #6 dumbbells at a strain rate of 500 mm/min with a chuck distance of 50 mm in accordance with JIS K 6251. The measuring temperatures are 25°C and 160°C.

(3) Repeated tensile test (permanent elongation measurement)

The test device used is AG-I produced by Shimadzu Corporation. The tensile conditions are #6 dumbbells, a chuck distance of 50 mm, and a chuck movement speed of 500 mm/min, in accordance with JIS-K 6251. The measurement was performed at 25°C and at 160°C. The sample was 100%-stretched repeatedly 10 times. When the measurement temperature was 25°C, the specimen after the test was treated in such a way that the specimen was left for 24 hours, and a gauge length was measured. When the measurement temperature was 160°C, the specimen was left at 160°C for 30 minutes, and then left at 25°C for 1 hour. Then, a gauge length was measured. Elongation percentage was determined also for a specimen 200%-stretched and a specimen 300%-stretched.

Permanent elongation was calculated based on the following formula.

$$\text{Permanent elongation (\%)} = ((\text{gauge length of specimen after the test, mm}) - 20\ (\text{mm}))/20\ (\text{mm}) \times 100$$

(4) Mooney viscosity ($ML_{1+10}$(100°C))

The Mooney viscosity was determined in accordance with ASTM-D 1646 and JIS K 6300. The measurement temperature was 100°C.

In the examples, the following fluororubbers, carbon black, cross-linking agent, cross-linking accelerator, processing aid, and acid acceptor were used.

(Fluororubber A1)

A 3-L stainless steel autoclave was charged with 1.7 L of pure water, 0.17 g of a 50% aqueous solution of $CH_2$=$CFCF_2OCF(CF_3)CF_2OCF(CF_3)COONH_4$, and 12 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 47/53 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 78/22 mol% was additionally fed to increase the inside pressure to 1.52 MPa. On that occasion, 1.0 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 43 g of the monomer mixture, 1.5 g of $ICH_2CF_2CF_2OCF$=$CF_2$ was fed under pressure. After addition of a total of 600 g of the monomer mixture, unreacted monomers were discharged, the autoclave was cooled, and 626 g of dispersion of fluororubber with a solid matter concentration of 26.4% by mass was obtained. The polymerization time was 7.6 hours. This dispersion of fluororubber was subjected to coagulation with a 1% by mass aqueous solution of aluminum sulfate. The resulting coagulum was rinsed with water and dried at 80°C for 8 hours and 120°C for 12 hours using a dryer. Thereby, a fluororubber was produced. The resulting fluororubber was examined by NMR analysis and found to have a copolymer composition of VdF/HFP = 76/24 (mol%) and a Mooney viscosity ($ML_{1+10}$ (100°C)) of 103. The fluororubber was called a fluororubber A1.

(Fluororubber A2)

A 3-L stainless steel autoclave was charged with 1.7 L of pure water, 0.17 g of a 50% aqueous solution of $CH_2$=$CFCF_2OCF(CF_3)CF_2OCF(CF_3)COONH_4$, and 12 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 49/51 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 78/22 mol% was additionally fed to increase the inside pressure to 1.52 MPa. On that occasion, 1.0 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 184 g of the monomer mixture, 1.5 g of $ICH_2CF_2CF_2OCF$=$CF_2$ was fed under pressure. After addition of a total of 600 g of the monomer mixture, unreacted monomers were discharged, the autoclave was cooled, and 620 g of dispersion of fluororubber with a solid matter concentration of 26.3% by mass was obtained. The polymerization time was 7.6 hours. This dispersion of fluororubber was subjected to coagulation with a 1% by mass aqueous solution of aluminum sulfate. The resulting coagulum was rinsed with water and dried at 80°C for 8 hours and 120°C for 12 hours using a dryer. Thereby, a fluororubber was produced. The resulting fluororubber was examined by NMR analysis and found to have a copolymer composition of VdF/HFP = 77/23 (mol%) and a Mooney viscosity ($ML_{1+10}$ (100°C)) of 112. The fluororubber was called a fluororubber A2.

(Fluororubber A3)

A 3-L stainless steel autoclave was charged with 1.7 L of pure water, 0.17 g of a 50% aqueous solution of $CH_2=CFCF_2OCF(CF_3)CF_2OCF(CF_3)COONH_4$, and 12 g of a 50% aqueous solution of $F(CF_2)_5COONH_4$. Then, air in the system was sufficiently replaced with nitrogen gas. The content was heated to 80°C while stirring at 600 rpm. Then, monomers were fed thereinto under pressure so that an initial monomer composition was VdF/HFP = 50/50 mol% and the pressure was 1.52 MPa. Then, a polymerization initiator solution prepared by dissolving 60 mg of APS in 5 ml of pure water was fed under nitrogen gas pressure to initiate a reaction. With the progress of polymerization, the inside pressure fell to 1.42 MPa. At that time, a monomer mixture of VdF/HFP = 78/22 mol% was additionally fed to increase the inside pressure to 1.52 MPa. On that occasion, 1.0 g of a diiodinated compound $I(CF_2)_4I$ was fed to the autoclave under pressure. While such pressurization followed by pressure drop was repeated, an aqueous solution of 60 mg of APS in 5 ml of pure water was fed under nitrogen gas pressure at 3-hour intervals and the polymerization reaction was thus continued. After addition of a total of 362 g of the monomer mixture, 1.5 g of $ICH_2CF_2CF_2OCF=CF_2$ was fed under pressure. After addition of a total of 600 g of the monomer mixture, unreacted monomers were discharged, the autoclave was cooled, and 631 g of dispersion of fluororubber with a solid matter concentration of 26.6% by mass was obtained. The polymerization time was 7.7 hours. This dispersion of fluororubber was subjected to coagulation with a 1% by mass aqueous solution of aluminum sulfate. The resulting coagulum was rinsed with water and dried at 80°C for 8 hours and 120°C for 8 hours using a dryer. Thereby, a fluororubber was produced. The resulting fluororubber was examined by NMR analysis and found to have a copolymer composition of VdF/HFP = 77/23 (mol%) and a Mooney viscosity ($ML_{1+10}$ (100°C)) of 146. The fluororubber was called a fluororubber A3.

(Carbon black)

ISAF ($N_2SA$ = 119 $m^2/g$, DBP oil absorption = 114 ml/100 g), "SEAST 6" (product name) product of Tokai Carbon Co., Ltd.

(Cross-linking agent)

2,5-dimethy-2,5-di(t-butylperoxy)hexane, "PERHEXA 25B" (product name) product of NOF Corporation

(Cross-linking accelerator)

Triallyl isocyanurate (TAIC), "TAIC" (product name) product of Nippon Kasei Chemical Company Limited

(Processing aid)

Stearylamine (FARMIN 86T) (product of Kao Corporation)

(Acid acceptor)

Zinc oxide (#1) (product of Sakai Chemical Industry Co., Ltd.)

Example 1

An amount of 100 parts by mass of the fluororubber (A1) was mixed with 20 parts by mass of the carbon black, 0.5 parts by mass the stearylamine, and 1.0 part by mass of the zinc oxide using a mixer (MixLabo 0.5 L, product of MORIYAMA COMPANY LTD., Rotor diameter: 6.6 cm, chip clearance: 0.05 cm) under the mixing conditions of front rotor speed of 60 rpm and back rotor speed of 50 rpm. Thereby, a fluororubber precompound (B1) was prepared. The maximum temperature (Tm) of the discharged mixed product was 163°C.

The resulting fluororubber precompound (B1) was subjected to the dynamic viscoelasticity test (1)-(A), and thereby the $\delta G'$ was determined. Table 1 shows the results.

Then, 121.5 parts by mass of the fluororubber precompound (B1) was mixed with 1.0 part by mass of the cross-linking agent, 0.5 parts by mass of the cross-linking accelerator (TAIC), and 0.5 parts by mass of the stearylamine for 30 minutes using an 8-inch open roll mixer (product of KANSAI ROLL Co., Ltd.) under the mixing conditions of front roll speed of 21 rpm, back roll speed of 19 rpm, and gap distance between rolls of 0.1 cm. Thereby, a fluororubber full compound (C1) was prepared. The maximum temperature of the discharged mixed product was 71°C.

The fluororubber full compound (C1) was pressed and cross-linked at 160°C for 30 minutes to prepare a 2-mm-thick sheet specimen. The sheet specimen was examined for tensile strength at break, elongation at break, and

creep characteristics, at room temperature and at 160°C. Table 1 shows the results.

The resulting cross-linked fluororubber was subjected to the dynamic viscoelasticity test (1)-(B), and the loss modulus E" and the storage modulus E' were determined. Table 1 shows the results.

Example 2

Various physical properties were determined in the same way as in Example 1, except that the fluororubber (A2) was used instead of the fluororubber (A1). Table 1 shows the results.

Example 3

Various physical properties were determined in the same way as in Example 1, except that the fluororubber (A3) was used instead of the fluororubber (A1). Table 1 shows the results.

[Table 1]

| | Example 1 | Example 2 | Example 3 |
|---|---|---|---|
| Fluororubber precompound (part by mass) | | | |
| Fluororubber (A1) | 100 | | |
| Fluororubber (A2) | | 100 | |
| Fluororubber (A3) | | | 100 |
| Carbon black | 20 | 20 | 20 |
| Zinc oxide | 1.0 | 1.0 | 1.0 |
| Stearylamine | 0.5 | 0.5 | 0.5 |
| Maximum temperature of discharged mixed product (°C) | 163 | 160 | 167 |
| Dynamic viscoelasticity test ((1)-(A) 160°C) | | | |
| $\delta$G'(kPa) | 630 | 628 | 687 |
| Fluororubber full compound (part by mass) | | | |
| Fluororubber precompound (B1) | 121.5 | | |
| Fluororubber precompound (B2) | | 121.5 | |
| Fluororubber precompound (B3) | | | 121.5 |
| TAIC | 0.5 | 0.5 | 0.5 |
| Cross-linking agent | 1.0 | 1.0 | 1.0 |
| Stearylamine | 0.5 | 0.5 | 0.5 |
| Maximum temperature of discharged mixed product (°C) | 71 | 71 | 72 |
| Press cross-linking conditions | 160°C, 30min | 160°C, 30min | 160°C, 30min |
| Mechanical properties of cross-linked product | | | |
| Measurement temperature 25°C | | | |
| Tensile strength at break (MPa) | 23.9 | 25.5 | 25.8 |
| Elongation at break (%) | 671 | 679 | 733 |
| Measurement temperature 160°C | | | |
| Tensile strength at break (MPa) | 4.9 | 5.0 | 4.2 |
| Elongation at break (%) | 381 | 396 | 355 |
| Permanent elongation (%) | | | |
| Measurement temperature 25°C | | | |
| 100% stretch, 10 times | 2 | 0 | 1 |
| 200% stretch, 10 times | 5 | 9 | 4 |
| 300% stretch, 10 times | 6 | 7 | 10 |
| Measurement temperature 160°C | | | |
| 100% stretch, 10 times | 2 | 2 | 3 |
| 200% stretch, 10 times | 2 | 5 | 6 |

(continued)

| | Example 1 | Example 2 | Example 3 |
|---|---|---|---|
| 300% stretch, 10 times | 9 | broken in 4 times | broken in 5 times |
| Dynamic viscoelasticity test ((1)-(B) 160°C) | | | |
| Storage modulus E' (kPa) | 5297 | 5353 | 5110 |
| Loss modulus E" (kPa) | 1104 | 1087 | 1054 |

## Claims

**1.** A fluororubber composition, comprising:

(1) a fluororubber (A) including

- 48-88 mol-% of structural units derived from vinylidene fluoride (VdF),
- 0-10 mol-% of structural units derived from tetrafluoroethylene (TFE) to the total amount 100 mol-% of structural units derived from all monomer components; and
- at least one of structural units derived from bis-olefins and structural units derived from compounds of the formula $CY^1_2=CY^2Rf^1X^1$ (1), wherein $Y^1$ and $Y^2$ each independently are F, H, or $-CH_3$; $Rf^1$ is a partly or fully fluorinated linear or branched alkylene group which may have one or more ether oxygen atoms; and $X^1$ is I or Br; and

(2) a carbon black (B) having a nitrogen adsorption specific surface area ($N_2SA$) of at least 10 $m^2/g$.

**2.** The fluororubber composition of claim 1, which before cross-linking has a difference δG' (G'(1%)-G'(100%)), determined by subtracting the shear modulus G'(100%) at 100% dynamic strain from the shear modulus G'(1%) at 1% dynamic strain in a dynamic viscoelasticity test with a rubber process analyzer (RPA) at a frequency of 1 Hz and a temperature of 100°C, of 120-3,000 kPa.

**3.** The fluororubber composition of claim 1 or 2, which contains 5-50 pbw of the carbon black (B) per 100 pbw of the fluororubber (A).

**4.** The fluororubber composition of any of claims 1-3, wherein the carbon black (B) is a carbon black having a nitrogen adsorption specific surface area ($N_2SA$) of 10-180 $m^2/g$ and a dibutyl phthalate (DBP) oil absorption of 40-180 ml/100 g.

**5.** The fluororubber composition of any of claims 1-4, which contains a cross-linking agent (C).

**6.** A formed product comprising a cross-linked fluororubber product which

(1) has a loss modulus E", determined by a dynamic viscoelasticity test at a temperature of 160°C,a tensile strain of 1%, an initial force of 157 cN and a frequency of 10 Hz, of 400-6,000 kPa; and
(2) is obtained by cross-linking the fluororubber composition of any of claims 1-5.

**7.** The formed product of claim 6, wherein the cross-linked fluororubber product has a storage modulus E', determined by a dynamic viscoelasticity test under conditions defined in claim 6, of 1,500-20,000 kPa.

**8.** The formed product of claim 6 or 7, which includes 5-50 pbw of the carbon black (B) per 100 pbw of the fluororubber (A).

## Patentansprüche

**1.** Fluorkautschukzusammensetzung, die umfasst:

(1) einen Fluorkautschuk (A), enthaltend

- 48-88 mol-% an Struktureinheiten, die Derivate des Vinylidenfluorids (VdF) sind,
- 0-10 mol-% an Struktureinheiten, die Derivate des Tetrafluorethylens (TFE) sind, bezogen auf die Gesamtmenge von 100 mol-% der Struktureinheiten, abgeleitet aus allen Monomerkomponenten; und
- mindestens eine Struktureinheit, die ein Derivat der bis-Olefine ist, und eine Struktureinheit, die ein Derivat der Verbindungen mit der Formel $CY^1_2=CY^2Rf^1X^1$ (1) ist, wobei $Y^1$ und $Y^2$ jeweils unabhängig F, H oder $-CH_3$ sind; $Rf_1$ eine teilweise oder komplett fluorierte lineare oder verzweigte Alkylengruppe ist, die ein oder mehrere Ether-Sauerstoffatome aufweisen kann; und $X^1$ I oder Br ist; und

(2) ein Kohlenschwarz (B), das eine auf die Stickstoffadsorption bezogene spezifische Oberfläche ($N_2SA$) von mindestens 10 $m^2/g$ aufweist.

**2.** Fluorkautschukzusammensetzung nach Anspruch 1, die vor der Vernetzung eine Differenz $\partial G'$ (G'(1%)-G'(100%)), bestimmt durch Subtraktion des Schermoduls G'(100%) bei 100% dynamischer Belastung vom Schermodul G'(1%) bei 1% dynamischer Belastung in einem dynamischen Viskoelastizitätstest mit einem Rubber Process Analyzer (RPA) bei einer Frequenz von 1 Hz und einer Temperatur von 100°C, von 120-3.000 kPa aufweist.

**3.** Fluorkautschukzusammensetzung nach Anspruch 1 oder 2, die 5-50 Gewichtsteile des Kohlenschwarzes (B) bezogen auf 100 Gewichtsteile des Fluorkautschuks (A) enthält.

**4.** Fluorkautschukzusammensetzung nach einem der Ansprüche 1-3, wobei das Kohlenschwarz (B) ein Kohlenschwarz ist, das eine auf die Stickstoffadsorption bezogene spezifische Oberfläche ($N_2SA$) von 10-180 $m^2/g$ und eine Dibutylphthalat (DBP) Öladsorption von 40-180 ml/100 g aufweist.

**5.** Fluorkautschukzusammensetzung nach einem der Ansprüche 1-4, die ein Vernetzungsmittel (C) enthält.

**6.** Formprodukt, das einen vernetztes Fluorkautschukprodukt umfasst, das

(1) einen Verlustmodul E" von 400-6.000 kPa aufweist, bestimmt durch einen dynamischen Viskoelastizitätstest bei einer Temperatur von 160°C, einer Zugbelastung von 1%, einer Ausgangskraft von 157 cN und einer Frequenz von 10 Hz; und
(2) durch Vernetzen der Fluorkautschukzusammensetzung aus einem der Ansprüche 1-5 erhalten wird.

**7.** Formprodukt nach Anspruch 6, wobei das vernetzte Fluorkautschukprodukt einen Speichermodul E' von 1.500-20.000 kPa aufweist, bestimmt durch einen dynamischen Viskoelastizitätstest unter den in Anspruch 6 definierten Bedingungen.

**8.** Formprodukt nach Anspruch 6 oder 7, das 5-50 Gewichtsteile des Kohlenschwarzes (B) bezogen auf 100 Gewichtsteile des Fluorkautschuks (A) enthält.

## Revendications

**1.** Composition de caoutchouc fluoré, comprenant :

(1) un caoutchouc fluoré (A) comportant

- 48 à 88 % en moles d'unités structurelles dérivées de fluorure de vinylidène (VdF),
- 0 à 10 % en moles d'unités structurelles dérivées de tétrafluoroéthylène (TFE) par rapport à la quantité totale de 100 % en moles d'unités structurelles dérivées de tous les composants monomères; et
- au moins une des unités structurelles dérivées de bis-oléfines et d'unités structurelles dérivées de composés de formule $CY^1_2=CY^2Rf^1x^1$ (1),
dans laquelle $Y^1$ et $Y^2$ sont chacun indépendamment F, H ou $-CH_3$ ; $Rf^1$ est un groupe alkylène, linéaire ou ramifié, partiellement ou totalement fluoré qui peut posséder un ou plusieurs atomes d'oxygène d'éther; et $x^1$ est I ou Br; et

(2) un noir de carbone (B) présentant une surface spécifique d'absorption d'azote ($N_2SA$) d'au moins 10 $m^2/g$.

**2.** Composition de caoutchouc fluoré selon la revendication 1 qui, avant réticulation, présente une différence $\delta G'$ (G'(1

%)-G'(100 %)), déterminée par soustraction du module de cisaillement G'(100 %) à 100 % de contrainte dynamique du module de cisaillement G'(1 %) à 1 % de contrainte dynamique dans un test de viscoélasticité dynamique avec un analyseur de traitement de caoutchouc (ATC) à une fréquence de 1 Hz et à une température de 100°C, de 120 à 3 000 kPa.

**3.** Composition de caoutchouc fluoré selon la revendication 1 ou 2, qui contient 5 à 50 pep (parties en poids) du noir de carbone (B) pour 100 pep du caoutchouc fluoré (A).

**4.** Composition de caoutchouc fluoré selon l'une des revendications 1 à 3, dans laquelle le noir de carbone (B) est un noir de carbone présentant une surface spécifique d'absorption d'azote ($N_2SA$) de 10 à 180 $m^2/g$ et une absorption d'huile de phtalate de dibutyle (DBP) de 40 à 180 ml/100 g.

**5.** Composition de caoutchouc fluoré selon l'une des revendications 1 à 4, qui contient un agent de réticulation (C).

**6.** Produit formé comprenant un produit de caoutchouc fluoré réticulé qui

(1) présente un module de perte E", déterminé par un test de viscoélasticité dynamique réalisé à une température de 160°C, une contrainte de traction de 1%, une force initiale de 157 cN et une fréquence de 10 Hz, de 400 à 6 000 kPa ; et
(2) est obtenu par réticulation de la composition de caoutchouc fluoré selon l'une des revendications 1 à 5.

**7.** Produit formé selon la revendication 6, dans lequel le produit de caoutchouc fluoré réticulé présente un module de conservation E', déterminé par un test de viscoélasticité dynamique réalisé sous les conditions définies à la revendication 6, de 1 500 à 20 000 kPa.

**8.** Produit formé selon la revendication 6 ou 7, qui comporte 5 à 50 pep de noir de carbone (B) pour 100 pep de caoutchouc fluoré (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008078738 A1
- EP 2264100 A1
- JP H03122153 A
- JP S6055050 A
- JP 2008184496 A
- JP H0625500 A